# EUROPEAN PATENT SPECIFICATION

(11) **EP 2 819 294 B1**
(45) Date of publication and mention of the grant of the patent: **03.02.2016**
(21) Application number: 13173384.2
(22) Date of filing: 24.06.2013
(51) Int. Cl.: H02P 1/20, H02P 7/29, H02P 23/00

(54) **Electric household appliance with an electronic control device for controlling an universal electric motor**
Elektrisches Haushaltsgerät mit elektronischer Steuerungsvorrichtung zur Steuerung eines elektrischen Universalmotors
Appareil électroménager avec dispositif de commande électronique pour commander un moteur électrique universel

(43) Date of publication of application: 31.12.2014
(73) Proprietor: Electrolux Appliances Aktiebolag, 105 45 Stockholm (SE)
(72) Inventor: Maguolo, Costantino, 33080 Porcia (PN) (IT); Lazzarin, Alberto, 33080 Porcia (PN) (IT)
(74) Representative: Nardoni, Andrea

(56) References cited:
- EP-A1- 2 317 631
- FR-A1- 2 138 847
- US-A- 4 042 865
- US-A1- 2007 146 958

## Description

The present invention relates to an electric household appliance, particularly to a laundry or tableware treating machine, such as a washing machine or a washer-dryer or a tumble dryer or a dishwasher, comprising an universal electric motor.

### BACKGROUND ART

As is known, over the past few years, the electric household appliance industry, and particularly the washing-machine industry, has successfully made increasing use of so-called "universal electric motors", which are typically mounted in the laundry drum drive of the machine. The universal electric motor is a single-phase electric commutator motor having a rotor, and a wound-wire stator that can be supplied with both direct and alternating current. More specifically, the universal electric motor comprises a stator fitted with a field winding hereinafter referred to as the "stator winding"; a rotor comprising a drum mounted to rotate inside the stator and supporting an armature winding hereinafter referred to as the "rotor winding"; a commutator of conducting material fitted to the drum and connected electrically to the rotor winding; and at least two brushes that slide on the commutator to supply current to the rotor winding.

In the washing-machine, the universal electric motor is typically controlled by an electronic control device, which controls the current supplied to the rotor/stator to regulate the motor speed/torque and consequently vary drum-speed and/or the drum-torque.

Control of the motor speed and/or motor torque are obtained using in the electronic control device a chopper stage, which performs a choppered-control of the current supply to the stator and rotor windings of the motor.

Typically, the electric circuit of the chopper stage comprises a rectifying bridge and an electrolytic capacitor, which is connected downstream of the rectifying bridge and is designed to increase the effective supply voltage to the universal electric motor stator to provide a greater mechanical torque than would be achieved without the capacitor for the same supply voltage and at the same rotation speed. However, rectifying bridge and the electrolytic capacitor introduce harmonics that causes undesired electromagnetic noise into the supply lines.

To eliminate this drawbacks, it is known to use in the electric circuit, a PFC electronic component (Power Factor Correction electronic component) comprising an inductor configured to filter the harmonics generated by the electrolytic capacitor. However, adding the inductor in the electric circuit causes the technical problem of increasing both the size and manufacturing cost of electronic control device.

EP 2 317 631 filed by the applicant of the present patent application, discloses an electric household appliance, wherein a first winding portion of the motor stator is used as PFC inductor in a power factor correction stage. Performing such solution by maintaining high torque performance at low motor speeds needs however a complicated electronic control device. In fact, electronic control device comprises the chopper regulating stage provided with a first control branch having first electronic switch to regulate a rotor current supplied to rotor winding, and a second control branch having a second electronic switch to regulate a stator current supplied to stator winding portion.

The electronic control device further comprises a chopper control unit which is configured to control first and second switches independently each other and is provided with complicated regulating stages designed to respectively determine the voltage to be supplied to the rotor winding and the voltage to be supplied to the stator winding portion for the rotor to rotate at the required speed/torque.

It is therefore an object of the present invention to provide an electronic control device for controlling an universal electric motor, which, on the one hand, provides the same advantages of the above disclosed electronic control device, and to the other hand is simplest and cheaper than said electronic control device.

According to the present invention, there is provided an electric household appliance as claimed in Claim 1 and preferably, though not necessarily, in any one of the Claims depending directly or indirectly on Claim 1.

A non-limiting embodiment of the present invention will be described by way of example with reference to the accompanying drawings, in which:
Figure 1 illustrates schematically a laundry treating machine provided with a electronic control device for controlling a universal electric motor in accordance with the teachings of the present invention;
Figure 2 illustrates the circuit of the electronic control device illustrated in Figure 1 in a first operating condition;
Figure 3 illustrates the circuit of the electronic control device illustrated in figure 1 in a second operating condition;
Figure 4 is a block diagram of a electronic controller of the electronic control device illustrated in Figure 1

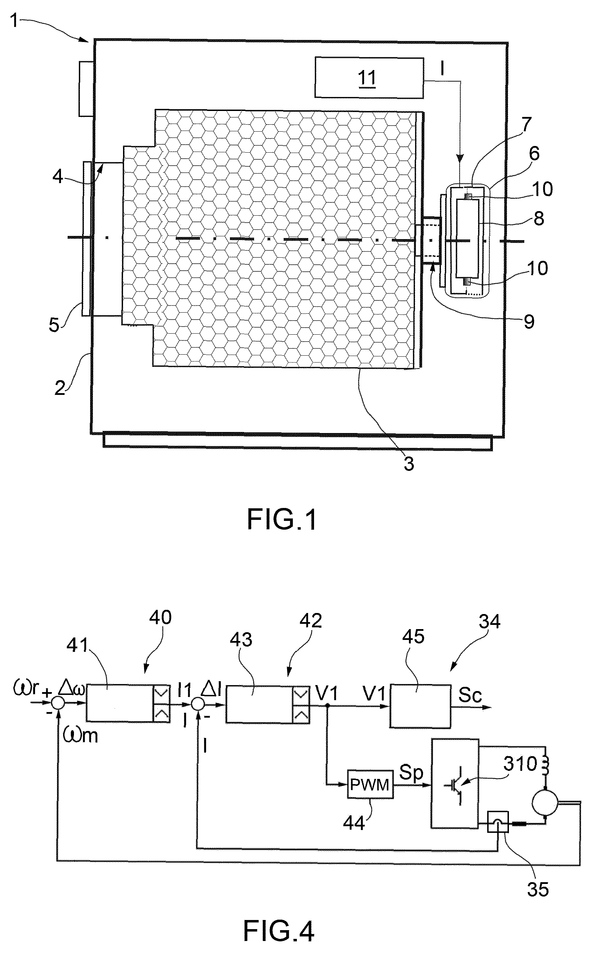

Number 1 in Figure 1 indicates as a whole an electric household appliance - preferably, though not necessarily, a washing-machine - substantially comprising a casing 2; a laundry drum 3 mounted inside casing 2 and directly facing a laundry loading/unloading opening 4 in casing 2; and a door 5 fitted to casing 2 to move, e.g. rotate, between an open position and a closed position respectively opening and closing opening 4.

Appliance 1 also comprises a universal electric motor 6, i.e. a single-phase electric commutator motor with sliding brushes 10, which, being known, is not described in detail, except to state that it comprises a stator (not shown) with a casing housing a stator winding 7; and a rotor (not shown), which comprises a drum mounted to rotate inside the stator and supporting a rotor winding 8, and is connected to laundry drum 3 by a known transmission mechanism 9 to rotate laundry drum 3.

The rotor of the universal electric motor 6 also comprises a commutator (not shown) fitted to the laundry drum 3 and electrically connected to rotor winding 8; and two brushes 10, which slide over the commutator to supply current I to the rotor winding 8 while the rotor is rotating.

As illustrated in Figures 1, 2 and 3, the household appliance 1 is also provided with an electronic control device 11 configured to control the electric motor 6, and comprising a rectifying circuit 12 designed to rectify a main AC Voltage to output a DC voltage; a chopper regulating circuit 13 configured to vary the stator and rotor current I to cause the motor speed to be controlled based on the required drum speed ωr; and a filter circuit 14 which connects the chopper regulating circuit 13 to the rectifying circuit 12.

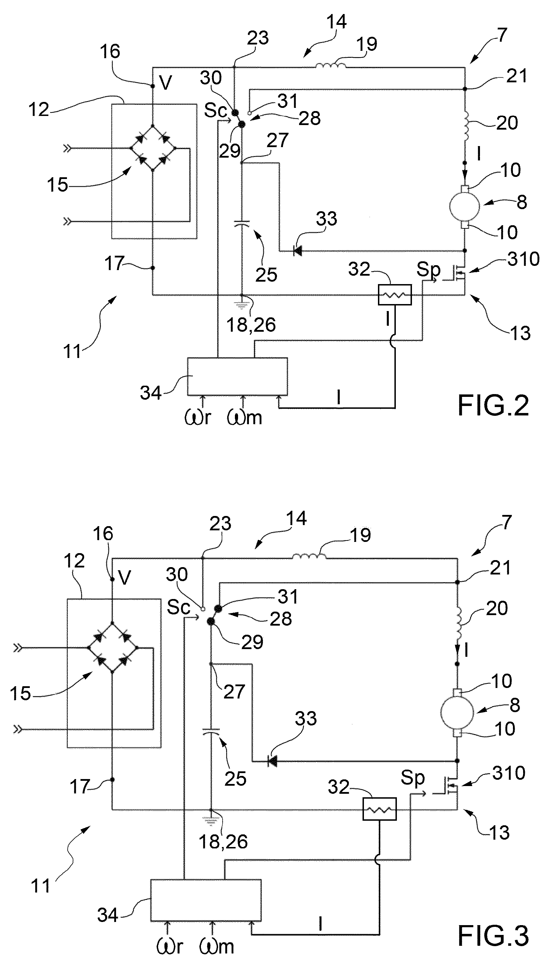

In the form illustrated in Figures 2 and 3, the rectifying circuit 12 comprises a rectifying bridge 15 having two input terminals connected preferably, although not necessarily, to the AC alternating current source by first and respectively second lines; and two output terminals 16, 17 outputting a partly rectified voltage V.

According to the invention, the stator winding 7 comprises a first stator winding portion 19 and a second stator winding portion 20 connected to the first stator winding portion 19 by means of a stator node 21. As illustrated in the Figures 2 and 3, the first 19 and second stator winding portions 20 are passed through by the current I circulating in the stator and rotor of the motor 6.

The filter circuit 14 comprises an inductor being the first stator winding portion 19 which, as will be explained next in detail, selectively operates as a PFC device (power factor correction device). The first stator winding portion 19 has a first terminal linked to the output terminal 16 of the rectifying bridge 15 through a intermediate node 23, and a second terminal connected to the stator node 21.

The filter circuit 14 further comprises a capacitor 25, which is provided with a first terminal 27, which is selectively connectable to the first or to the second terminal of first stator winding portion 19, i.e. to the intermediate node 23 or alternately to the stator node 21 by means of a controlled switch 28, and a second terminal 18 connected to the output terminal 17 of the rectifying bridge 15 by means of an intermediate node 26, preferably, although not necessarily, set to a ground potential.

More specifically, the controlled switch 28 has a first terminal 29 linked to the second terminal 27 of the capacitor 25 in the manner illustrated, a second terminal 30 connected to the intermediate node 23, and a third terminal 31 connected to the stator node 21.

The controlled switch 28 is configured to be inverted from a first state (illustrated in Figure 2) to a second state (illustrated in Figure 3) and vice versa, based on a state signal Sc. More specifically, in the first state, the mobile contact of the controlled switch 28 is arranged so as to connect the first terminal 29 to the second terminal 30 in order to link the capacitor 25 to the first terminal of the first stator winding portion 19, whereas in the second position, the mobile contact of the controlled switch 28 is arranged to connect the first terminal 29 to the third terminal 31 in order to link the capacitor 25 to the stator node 21, and consequently to the second terminal of the first stator winding portion 19.

It should be pointed out that, when the controlled switch 28 is in the second state (Figure 3), the first stator winding portion 19 operates as a passive power factor correction inductor (PFC inductor) that advantageously filters the harmonics generated by the capacitor 25 and reduces the stator magnetic field. In this case, motor 6 is configured to provide high speed and low torque.

On the contrary, when the controlled switch 28 is in the first state (Figure 2), the stator winding portions 19 and 20 are connected directly in series each other, such that the maximum magnetic field is generated. In this condition the motor 6 is configured to provide conveniently a high torque and a low speed.

In a preferred embodiment, the controlled switch 28 may be a mechanical switch electrically controllable, such as a relay, which is advantageously simple and cheaper.

As regards the chopper regulating circuit 13, it comprises a control branch which is connected between a brush 10 of the rotor winding 8 of the motor 6 and the intermediate node 26, and is configured to regulate the current I/ tension V supplied to the motor, i.e. the rotor/stator based on a control signal Sp.

In a preferred embodiment illustrated in Figures 2 and 3, the control branch comprises an electronic switch 310, e.g. a transistor, presenting a first terminal connected to the brush 10, a second terminal connected to the intermediate node 26 by means of a current measuring device 32, i.e. a shunt, and a third gate or terminal which receives the control signal Sp for opening/closing electronic switch 310.

The control branch further comprises a one-way electronic device, in particular a diode 33 which is connected between the first terminal 27 of the capacitor 25 and the first terminal of the electronic switch 310.

Chopper regulating circuit 13 further comprises a chopper controller 34 which is configured to receive: a first value indicating a reference motor speed ωr which corresponds to the required rotor speed at a certain instance, a second value indicating the measured motor speed ωm, which corresponds to the measured rotor speed, and a third value indicating the measured current I which is passed through the rotor/stator.

Chopper controller 34 is further configured to provide the control signal Sp based on both the measured current I and a speed difference Δω which is the difference between the reference/required motor speed ω and the measured motor speed ωm.

Chopper controller 34 is further configured to generate the state signal Sc based on a value that is indicative of the motor speed. Naturally, the motor speed used by the chopper controller 34 for generating the state signal Sc could be the reference motor speed ωr or the measured motor speed ωm.

According to a preferred embodiment, chopper controller 34 generates the state signal Sc to cause the controlled switch 28 to be switched in the first state to connect the capacitor 25 to the intermediate node 23 (Figure 2), if the reference/required motor speed ωr is lower than a prefixed speed, such that first 19 and second stator winding portions 20 are linked in series and an high torque can be provided.

Chopper controller 34 is further configured to generate the state signal Sc to cause the controlled switch 28 to be switched in the second state (Figure 3) to connect the capacitor 25 to the stator node 21, if the required motor speed ωr is greater than a prefixed speed, such that first stator winding portions 19 operates as a PFC device, and the high motor speed can be reached.

According to a preferred form illustrated in Figure 4, the chopper controller 34 comprise a speed control loop circuit and a current control loop circuit to output a first tension V1, and is configured to generate both the control signal Sp and the state signal Sc according to the calculated first tension V1.

More specifically, the chopper controller 34 comprises a speed control loop circuit 40, which receives the required/reference motor speed ωr and the measured motor speed ωm measured on the rotor, e.g. by means of a speed sensor arranged on the rotor, and outputs a first current value I1 based on the differential speed value Δω being the difference between the reference motor speed ωr and the measured motor speed ωm.

The speed control loop circuit 40 may comprise a regulating module 41 which varies the first current value I1 in proportion with the differential speed value Δω.

The chopper controller 34 further comprises a current control loop circuit 42, which receives the first current value I1 and the measured motor current I, and outputs the first voltage V1 based on the differential current ΔI, which is the difference between the first current value I1 and the measured motor current I. The current control loop 42 may comprise a regulating module 43 which varies the output voltage V1 in proportion with the differential current ΔI.

The chopper controller 34 further comprises a PWM modulator device 44 configured to generate the control signal Sp corresponding to a pulse-width modulation signal (PWM) based on the first voltage V1, to control opening/closing of the electronic switch 310 and bring the motor speed to the required speed ωr.

The chopper controller 34 further comprises a field control device 45, which receives the first voltage V1, and generates the state signal Sc based on the first voltage V1.

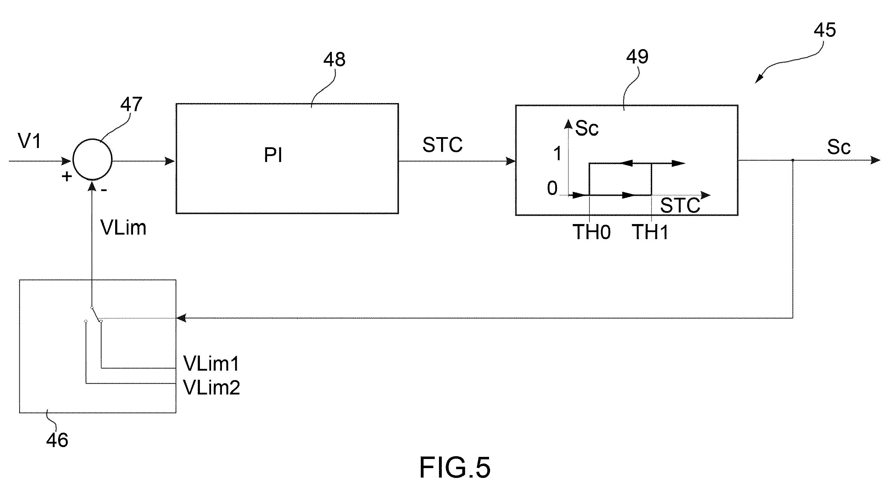

As illustrated in Figure 5, the field control device 45 comprises a threshold selector module 46, which is designed to output a threshold voltage VLim based on the state signal Sc. In detail, the threshold selector module 46 may be configured such that if state signal Sc has a first logic value, i.e. Sc=1, than it assigns a first threshold voltage VLim1 to the threshold voltage VLim. The threshold selector module 46 may be further configured such that if state signal Sc has a second logic value, i.e. Sc=0, than it assigns a second threshold voltage VLim2 to the threshold voltage VLim.

The field control device 45 further comprises a subtractor node 47, which receives the threshold voltage VLim and the first voltage V1, calculates the difference between the first voltage V1 and the threshold voltage VLim to generate a differential tension ΔV= (V1-VLim).

The field control device 45 further comprises a PI proportional-integral module 48 configured to output a control value STC determined in proportion with differential tension ΔV, and a hysteresis module 49 which receives the control value STC, and outputs the state signal Sc determined according to a hysteresis function and on the basis of the control value STC.

According to a preferred embodiment, the hysteresis module 49 is configured to change/commute the logic value of the state signal Sc based on the result of a comparison between the control value STC and a first/second prefixed threshold THO/TH1 of the hysteresis function.

More specifically, the hysteresis module 49 is configured to commute the state signal Sc from the first value to the second value if the control value STC is lower than a first prefixed threshold TH0.

The hysteresis module 49 is further configured to commute the state signal Sc from the second value to the first value if the control value STC is greater than a second prefixed threshold TH1.

According to a preferred embodiment, the first prefixed threshold TH0 is lower than the second prefixed threshold TH1, and the logic value of the state signal Sc is maintained unchanged until the control value STC is not lower or greater than the first TH0 or respectively the second TH1 prefixed thresholds.

According to a preferred embodiment, the controlled switch 28 may be configured to commute in the second position if the state signal Sc has the first logic value, and, alternately, commute in the first position if the state signal Sc has the first logic value.

In use, the electronic control device 11 advantageously commutes the controlled switch 28 in the second position during high speed operation in order to reduce via hardware the magnetic field of the motor and introduce the first stator winding portion as passive power factor corrector device.

Vice versa, when big torque and low speed are required, the electronic control device 11 commutes the controlled switch 28 in the first position such that the stator generate the full magnetic field.

It can been seen from above that the electronic control device according to the invention provides for a simple and cheap solution that allows to use the first stator winding portion as a passive power factor correction inductor only when there is the need to filter the harmonics, namely in high speed condition..

Clearly, changes may be made to the electric household appliance and the electronic control device as described herein without, however, departing from the scope of the present invention as defined in the accompanying Claims.

## Claims

1. An electric household appliance (1), particularly a laundry treating machine, comprising an universal electric motor (6) provided with at least a first stator winding portion (19) having a first terminal connectable to a voltage source and a second terminal which is connected to a second stator winding portion (20), the household appliance (1) further comprising electronic control means (11) which comprise a chopper regulating circuit (13) which is configured to chopper-regulate the current (I) supplied to the motor (6) based on a first value indicating the required rotor speed (ωr), and a filtering circuit (14) comprising a least one capacitor (25) and a power factor corrector inductor (19) being said first stator winding portion (19);
said electric household appliance (1) being **characterized in that** said electronic control means (11) are further configured to selectively connect said capacitor to said first or said second terminal of said first stator winding portion (19).

2. Appliance according to claim 1, wherein electronic control means (11) are further configured to selectively connect said capacitor (25) to said first (23) or said second terminal (21) of said first stator winding portion (19) based on said first value indicating the rotor speed (ωr).

3. Appliance according to claim 2, wherein said electronic control means (11) are further configured to selectively connect a first terminal (27) of said capacitor (25) to said first terminal (23) of said first stator winding portion (19) when said first value is lower than a prefixed low speed threshold.

4. Appliance according to claims 2 or 3, wherein electronic control means (11) are further configured to selectively connect a first terminal (27) of said capacitor (25) to said second terminal (21) of the first stator winding portion (19) when said first value is greater than a prefixed high speed threshold.

5. Appliance according to any of the previous claims, wherein said electronic control means (11) comprise switching means (28) designed to switch, on the basis of a state signal (Sc), to selectively connect said first terminal (27) of said capacitor (25) to said first (23) or said second terminal (21) of said first stator winding portion (19) such that the power factor corrector inductor (19) is excluded from, or alternately included in said filtering circuit (14).

6. Appliance according to claim 5, wherein said electronic control means (11) comprise an electronic controller (34) which is provided with speed (40) and current control loop circuits (42) outputting a first tension (V1) based the said current (I) and said first value, and is configured to generate said state signal (Sc) on the basis of said first tension (V1).

7. Appliance according to claim 6, wherein said electronic controller (34) comprises a speed control loop circuit (40), which receives the first value indicating the required motor speed (ωr) and a measured motor speed (ωm) measured on the rotor, and outputs a first current value (I1) based on the differential speed value (Δω) being the difference between the required motor speed (ωr) and the measured motor speed (ωm).

8. Appliance according to claim 7, wherein said electronic controller (34) further comprises a current control loop circuit (42), which receives the first current value (I1) and the measured motor current (I), and outputs said first voltage (V1) based on the differential current (ΔI) which is the difference between the first current value (I1) and the measured motor current (I).

9. Appliance according to claim 8, wherein the first (19) and second stator windings (20) are connected in series with the rotor winding (8) by means of brushes (10) and are passed by said current (I); said chopper regulating circuit (13) comprising a electronic switch (310) which is configured to regulate said current (I); said electronic controller (34) further comprises a (PWM) modulator device (44) configured to control opening/closing of an electronic switch (310) based on the first voltage (V1).

10. Appliance according to claim 9, wherein said electronic controller (34) further comprise a field control device (45), which receives the first voltage (V1), and generates the state signal (Sc) based on the first voltage (V1).

11. Appliance according to claim 10, wherein the field control device (45) comprises a threshold selector module (46), which is designed to output a threshold voltage (VLim) based on the logic value of the state signal (Sc).

12. Appliance according to claim 11, wherein the field control device (45) further comprises a subtractor node (47), which receives the threshold voltage (VLim) and the first voltage (V1), calculates the difference between the first voltage (V1) and the threshold voltage (VLim) to generate a differential tension (ΔV).

13. Appliance according to claim 12, wherein the field control device (45) further comprises a PI proportional-integral module (48) configured to output a control value (STC) determined in proportion with differential tension (ΔV).

14. Appliance according to claim 13, wherein the field control device (45) further comprise a hysteresis module (49) which receives the control value (STC), and outputs the state signal (Sc) determined according to a hysteresis function and on the basis of the control value (STC).

15. Appliance according to claim 14, wherein, the hysteresis module (49) is configured to change/commute the logic value of the state signal (Sc) based on the result of a comparison between the control value (STC) and a first/second prefixed threshold (TH0/TH1) of the hysteresis function.

## Patentansprüche

1. Elektrisches Haushaltsgerät (1), genauer eine Wäschebehandlungsmaschine, die einen elektrischen Universalmotor (6) umfasst, der mit mindestens einem ersten Statorwicklungsteil (19) ausgestattet ist, der eine erste Anschlussklemme, die an eine Spannungsquelle angeschlossen werden kann, und eine zweite Anschlussklemme hat, die an einen zweiten Statorwicklungsteil (20) angeschlossen ist, wobei das Haushaltsgerät (1) ferner eine elektronische Steuerungsvorrichtung (11) umfasst, die einen Zerhacker-Regelkreis (13) umfasst, der konfiguriert ist, um den Strom (I) zu zerhacken, mit dem der Motor (6) auf Grundlage eines ersten Werts versorgt wird, der die benötigte Rotordrehzahl (ωr) anzeigt, und einen Filterkreis (14) umfasst, der mindestens einen Kondensator (25) und eine Spule zur Blindleistungskompensation (19) umfasst, die den ersten Statorwicklungsteil (19) darstellt;
wobei das elektrische Haushaltsgerät (1) **dadurch gekennzeichnet ist, dass** die elektronische Steuerungsvorrichtung (11) ferner konfiguriert ist, um den Kondensator selektiv an die erste oder zweite Anschlussklemme des ersten Statorwicklungsteils (19) anzuschließen.

2. Gerät nach Anspruch (1), wobei die elektronische Steuerungsvorrichtung (11) ferner konfiguriert ist, den Kondensator (25) selektiv an die erste (23) oder zweite Anschlussklemme (21) des ersten Statorwicklungsteils (19) auf Grundlage des ersten Werts, der die Rotordrehzahl (ωr) anzeigt, anzuschließen.

3. Gerät nach Anspruch 2, wobei die elektronische Steuerungsvorrichtung(11) ferner konfiguriert ist, selektiv eine erste Anschlussklemme (27) des Kondensators (25) an die erste Anschlussklemme (23) des ersten Statorwicklungsteils (19) anzuschließen, wenn der erste Wert kleiner ist als eine vorgegebene niedrige Drehzahlschwelle.

4. Gerät nach Anspruch 2 oder 3, wobei die elektronische Steuerungsvorrichtung (11) ferner konfiguriert ist, selektiv eine erste Anschlussklemme (27) des Kondensators (25) an die zweite Anschlussklemme (21) des ersten Statorwicklungsteils (19) anzuschließen, wenn der erste Wert größer ist als die vorgegebene hohe Drehzahlschwelle.

5. Gerät nach einem der vorgenannten Ansprüche, wobei die elektronische Steuerungsvorrichtung (11) eine Schaltvorrichtung (28) umfasst, die angeordnet ist, um auf Grundlage eines Zustandssignals (Sc) selektiv die erste Anschlussklemme (27) des Kondensators (25) an die erste (23) oder zweite Anschlussklemme (21) des ersten Statorwicklungsteils (19) anzuschließen, sodass die Spule zur Blindleistungskompensation (19) wechselweise aus dem oder in den Filterkreis (14) ausgeschlossen oder eingeschlossen wird.

6. Gerät nach Anspruch 5, wobei die elektronische Steuerungsvorrichtung (11) eine elektronische Steuereinheit (34) umfasst, die mit Drehzahl- (40) und Stromregelungskreisläufen (42) ausgestattet ist, die eine erste Spannung (V1) auf Grundlage des Stroms (I) und des ersten Werts ausgeben, und konfiguriert ist, um das Zustandssignal (Sc) auf Grundlage der ersten Spannung (V1) zu erzeugen.

7. Gerät nach Anspruch 6, wobei die elektronische Steuereinheit (34) einen Drehzahlregelungskreislauf (40) umfasst, der den ersten Wert aufnimmt, der die benötigte Motordrehzahl (ωr) und eine am Rotor gemessene Motordrehzahl (ωm) anzeigt und einen ersten Stromwert (I1) auf Grundlage des Drehzahldifferenzwerts (Δω) ausgibt, der die Differenz zwischen der benötigten Motordrehzahl (ωr) und der gemessenen Motordrehzahl (ωm) ist.

8. Gerät nach Anspruch 7, wobei die elektronische Steuereinheit (34) ferner einen Stromregelungskreislauf (42) umfasst, der den ersten Stromwert (I1) und den gemessenen Motorenstrom (I) aufnimmt, und die erste Spannung (V1) auf Grundlage des Differenzstroms (ΔI) ausgibt, der die Differenz zwischen dem ersten Stromwert (I1) und dem gemessen Motorstrom (I) ist.

9. Gerät nach Anspruch 8, wobei die erste (19) und zweite Statorwicklung (20) in Serie mit der Rotorwicklung (8) über Bürsten (10) verbunden sind und von dem Strom (I) durchlaufen werden; wobei der Zerhacker-Regelkreis (13) einen elektronischen Schalter (310) umfasst, der konfiguriert ist, den Strom (I) zu regeln; wobei die elektronische Steuereinheit (34) ferner eine Modulatorvorrichtung (PWM) (44) umfasst, die konfiguriert ist, das Öffnen/Schließen des elektronischen Schalters (310) auf Grundlage der ersten Spannung (V1) zu steuern.

10. Gerät nach Anspruch 9, wobei die elektronische Steuereinheit (34) ferner eine Feldsteuervorrichtung (45) umfasst, die die erste Spannung (V1) aufnimmt, und das Zustandssignal (Sc) auf Grundlage der ersten Spannung (V1) erzeugt.

11. Gerät nach Anspruch 10, wobei die Feldsteuervorrichtung (45) einen Schwellenauswahlschalter (46) umfasst, der angeordnet ist, eine Schwellenspannung (VLim) auf Grundlage des Logikwerts des Zustandssignals (Sc) auszugeben.

12. Gerät nach Anspruch 11, wobei die Feldsteuervorrichtung (45) ferner einen Subtrahierknotenpunkt (47) umfasst, der die Schwellenspannung (VLim) und die erste Spannung (V1) aufnimmt, die Differenz zwischen der ersten Spannung (V1) und der Schwellenspannung (VLim) berechnet, um eine Differenzspannung (ΔV) zu erzeugen.

13. Gerät nach Anspruch 12, wobei die Feldsteuervorrichtung (45) ferner ein Proportional-Integral-Modul (PI) (48) umfasst, das konfiguriert ist, einen Steuerwert (SCT) auszugeben, der im Verhältnis zur Differenzspannung (ΔV) bestimmt wird.

14. Gerät nach Anspruch 13, wobei die Feldsteuervorrichtung (45) ferner ein Hysteresemodul (49) umfasst, das den Steuerwert (STC) aufnimmt, und das Zustandssignal (Sc) ausgibt, das entsprechend einer Hysteresefunktion und auf Grundlage des Steuerwerts (SCT) bestimmt wird.

15. Gerät nach Anspruch 14, wobei das Hysteresemodul (49) konfiguriert ist, den Logikwert des Zustandssignals (Sc) auf Grundlage des Ergebnisses eines Vergleichs zwischen Steuerwert (STC) und einer ersten/zweiten vorgegebenen Schwelle (TH0/TH1) der Hysteresefunktion zu ändern/umzuwandeln.

## Revendications

1. Appareil électroménager (1), en particulier une machine de blanchisserie, comprenant un moteur électrique universel (6) doté d'au moins une première partie d'enroulement de stator (19) présentant une première borne susceptible d'être raccordée à une source de tension, et une deuxième borne raccordée à une deuxième partie d'enroulement de stator (20), l'appareil électroménager (1) comprenant en outre des moyens de commande électroniques (11) comprenant un circuit de régulation par hachage (13) configuré pour réguler par hachage le courant (I) fourni au moteur (6), sur la base d'une première valeur indiquant la vitesse de rotor (ω̅r) requise, et un circuit de filtrage (14) comprenant au moins un condensateur (25) et un inducteur de correcteur de facteur de puissance (19) consistant en ladite première partie d'enroulement de stator (19) ;
ledit appareil électroménager (1) étant **caractérisé en ce que** lesdits moyens de commande électroniques (11) sont en outre configurés pour raccorder de façon sélective ledit condensateur à ladite première ou deuxième borne de ladite première partie d'enroulement de stator (19).

2. Appareil selon la revendication 1, dans lequel les moyens de commande électroniques (11) sont en outre configurés pour raccorder de façon sélective ledit condensateur (25) à ladite première (23) ou à ladite deuxième borne (21) de ladite première partie d'enroulement de stator (19), sur la base de ladite première valeur indiquant la vitesse de rotor (ω̅r).

3. Appareil selon la revendication 2, dans lequel lesdits moyens de commande électroniques (11) sont en outre configurés pour raccorder de façon sélective une première borne (27) dudit condensateur (25) à ladite première borne (23) de ladite première partie d'enroulement de stator (19) lorsque ladite première valeur est inférieure à un seuil inférieur de vitesse prédéfini.

4. Appareil selon la revendication 2 ou 3, dans lequel les moyens de commande électroniques (11) sont en outre configurés pour raccorder de manière sélective une première borne (27) dudit condensateur (25) à ladite deuxième borne (21) de la première partie d'enroulement de stator (19) lorsque ladite première valeur est supérieure à un seuil supérieur de vitesse prédéfini.

5. Appareil selon l'une quelconque des revendications précédentes, dans lequel lesdits moyens de commande électroniques (11) comprennent un moyen de commutation (28) conçu pour être commuté, sur la base d'un signal d'état (Sc), afin de raccorder de manière sélective ladite première borne (27) dudit condensateur (25) à ladite première (23) ou à ladite deuxième borne (21) de ladite première partie d'enroulement de stator (19), de façon à ce que l'inducteur de correcteur de facteur de puissance (19) soit exclu dudit circuit de filtrage (14), ou alternativement inclus dans celui-ci.

6. Appareil selon la revendication 5, dans lequel lesdits moyens de commande électroniques (11) comprennent un dispositif de commande électronique (34) doté de circuits de vitesse (40) et de commande de courant en boucle (42) fournissant une première tension (V1) sur la base dudit courant (I) et de ladite valeur, tout en étant configuré pour générer ledit signal d'état (Sc) sur la base de ladite première tension (V1).

7. Appareil selon la revendication 6, dans lequel ledit dispositif de commande électronique (34) comprend un circuit de commande de vitesse en boucle (40), lequel reçoit la première valeur indiquant la vitesse de moteur requise (ω̅r) ainsi qu'une vitesse de moteur mesurée (ω̅m) prélevée sur le rotor, et génère une première valeur de courant (I1) basée sur la valeur de vitesse différentielle (Δω̅) correspondant à la différence entre la vitesse de moteur requise (ω̅r) et la vitesse de moteur mesurée (ω̅m).

8. Appareil selon la revendication 7, dans lequel ledit dispositif de commande électronique (34) comprend en outre un circuit de commande de courant en boucle (42), lequel reçoit une première valeur de courant (I1) ainsi que le courant de moteur mesuré (I), et génère ladite première tension (V1) sur la base du courant différentiel (ΔI) correspondant à la différence entre la première valeur de courant (I1) et le courant de moteur mesuré (I).

9. Appareil selon la revendication 8, dans lequel les premier (19) et deuxième enroulements de stator (20) sont raccordés en série à l'enroulement de rotor (8) au moyen de brosses (10), et sont traversés par ledit courant (I) ; ledit circuit de régulation par hachage (13) comprenant un commutateur électronique (310) configuré pour réguler ledit courant (I) ; ledit dispositif de commande électronique (34) comprenant en outre un dispositif de modulation (PWM) (44) configuré pour commander l'ouverture/la fermeture d'un commutateur électronique (310) sur la base de la première tension (V1).

10. Appareil selon la revendication 9, dans lequel ledit dispositif de commande électronique (34) comprend en outre un dispositif de commande de champ (45), lequel reçoit la première tension (V1) et génère le signal d'état (Sc) sur la base de la première tension (V1).

11. Appareil selon la revendication 10, dans lequel le dispositif de commande de champ (45) comprend un module de sélection de seuil (46), lequel est conçu pour fournir une tension de seuil (VLim) sur la base de la valeur logique du signal d'état (Sc).

12. Appareil selon la revendication 11, dans lequel le dispositif de commande de champ (45) comprend en outre un noeud de soustraction (47), lequel reçoit la tension de seuil (VLim) et la première tension (V1), calcule la différence entre la première tension (V1) et la tension de seuil (VLim) afin de générer une tension différentielle (ΔV).

13. Appareil selon la revendication 12, dans lequel le dispositif de commande de champ (45) comprend en outre un module proportionnel-intégral PI (48) configuré pour fournir une valeur de commande (STC) déterminé proportionnellement à la tension différentielle (ΔV).

14. Appareil selon la revendication 13, dans lequel le dispositif de commande de champ (45) comprend en outre un module avec hystérèse (49), lequel reçoit la valeur de commande (STC) et fournit un signal d'état (Sc) déterminé conformément à une fonction d'hystérèse et sur la base de la valeur de commande (STC).

15. Appareil selon la revendication 14, dans lequel le module avec hystérèse (49) est configuré pour modifier/commuter la valeur logique du signal d'état (Sc) sur la base du résultat d'une comparaison entre la valeur de commande (STC) et un premier/deuxième seuil prédéfini (TH0/TH1) de la fonction d'hystérèse.
